# EUROPEAN PATENT SPECIFICATION

(11) **EP 2 598 277 B1**
(45) Date of publication and mention of the grant of the patent: **11.11.2015**
(21) Application number: 11738201.0
(22) Date of filing: 22.07.2011
(51) Int. Cl.: B23K 20/12

(54) **METHOD OF CONNECTING TWO AIRCRAFT FUSELAGE SEGMENTS BY MEANS OF FRICTION TWIST WELDING AND A COVER PLATE**
VERFAHREN ZUR VERBINDUNG ZWEIer FLUGZEUGRUMPFSEGMENTEN MITTELS REIBUNGSDREHSCHWEISSEN UND EINER ABDECKPLATTE
PROCÉDÉ D'ASSEMBLAGE DE DEUX SEGMENTS DE FUSELAGE D'AÉRONEF PAR SOUDAGE PAR FRICTION-MALAXAGE ET D'UNE PLAQUE DE RECOUVREMENT

(30) Priority: 27.07.2010 DE 102010032402
(43) Date of publication of application: 05.06.2013
(73) Proprietor: Airbus Operations GmbH, 21129 Hamburg (DE)
(72) Inventor: SILVANUS, Juergen, 82008 Unterhaching (DE); PACCHIONE, Marco, 22605 Hamburg (DE); ELZE, Stefan, 28203 Bremen (DE)
(74) Representative: Isarpatent
(86) International application number: PCT/EP2011/062690
(87) International publication number: WO 2012/013610

(56) References cited:
- EP-A1- 1 547 718
- DE-A1-102008 025 872
- JP-A- 2000 317 652
- JP-A- 2000 317 653
- US-A1- 2006 108 394

## Description

The invention relates to a method of connecting two aircraft fuselage segments and a reinforcing profile arranged in the joint region of the two aircraft fuselage segments by friction twist welding using a rotating tool (see EP 1 547 718 A).

In the construction of aircraft in particular, the tolerance requirements of the fuselage segments to be connected have not generally previously permitted any butt-joint welding by means of friction twist welding, because the gaps to be expected only permit a process to be carried out with costly additional measures. The welded interconnection of large components curved in one dimension (i.e. barrel-shaped) requires a tensioning process, in which a substantial part of the tensioning components are inside the components and have to be removed at considerable cost after welding.

Joining connections between aircraft fuselage segments are therefore conventionally carried out in the lap joint, in particular via a lap rivet connection, in which the plurality of rows of rivets are arranged side by side.

If a reinforcing profile (for example a stringer) is fitted, this component is additionally connected to one or more rows of rivets.

A generic method is known from DE 10 2008 025 872 A1, in which the aircraft fuselage segments are interconnected by means of friction twist welding. A reinforcing profile/stringer can additionally be welded during the welding process, said reinforcing profile acting as a thrust bearing against the compression force generated by the rotating tool.

The disadvantage of this conventional method is that the components have to be manufactured relatively precisely, as the gap tolerances cannot be greater that approx. 50% of the component thickness (approx. 1.3 mm) in order to meet the high welding quality requirements. A further disadvantage is that the surface is irregular or rough after the welding process and thus the requirements for a smooth outer skin of the formed aircraft can only be met with increased outlay.

On this basis, the object of the invention is to prevent the aforementioned disadvantages and to specify a method for connecting two aircraft fuselage segments, which method can be carried out with a reduced production outlay in terms of the dimensional tolerances and permits a connection with a smooth outer contour of the weld seam.

This object is achieved according to the invention by the features indicated in claim 1. Advantageous developments emerge from the sub-claims.

In particular, the invention proposes to place a cover plate above the joint regions on the aircraft fuselage segments to be connected, the region of the cover plate being milled smooth after the friction twist welding.

This advantageously makes is possible for significantly greater gap tolerances to be overcome without the weld seam quality being affected. Gap widths in the region of 2 mm (in workpieces approx. 3 mm thick) can be bridged. The dimensional tolerance requirements of the aircraft fuselage segments can thus be reduced. The remains of the cover plate are removed by the subsequent milling process and a smooth surface can be achieved in the welded region. Furthermore, in comparison to some conventional friction twist welding methods, a potential for weight reduction and improved strength properties emerge.

Friction twist welding methods which make use of cover plates are known per se from JP 2004261895 A or EP 1 790 425 A1, but the end surfaces are uneven once the welding process is complete, with the result that the application in the connection of aircraft fuselage segments leads to undesirable flow phenomena at these joint regions.

According to an advantageous development of the invention, the cover plate has a thickness which is greater than the diameter of the tool, with the result that marginal strips of the cover plate remain on either side of the tool during friction twist welding. These remaining marginal strips are milled out in the subsequent milling process. In this way, it is ensured that no undesirable deformations form on the edges of the cover plate so that a smooth contour is achieved after the milling process.

According to an advantageous development of the invention, a cover plate is used with a wall thickness which corresponds approximately to the depth of the fuselage segments to be connected, i.e. approximately 3 to 5 mm. On the one hand, at this wall thickness sufficient material is pressed into the gap between the joint regions to achieve a sufficient connection of the two joint regions, and on the other hand material remains above the surface of the actual aircraft fuselage segment and can be removed in the subsequent milling process.

According to the invention, the machining process is repeated at least once with the tool. This development has the advantage that the entire joining process can be divided between two welding processes, with the result that larger gap widths can be bridged as the amount of the filling material transported from the cover plate in the gap is increased and this gap is already filled in part after the first welding process.

According to the invention, a cover plate is used which comprises a material strip in the centre, which material strip is pressed into the gap between the joint regions during the welding process. In this case, the amount of material required to fill the gaps is supplied by the material strips integrally formed on the cover plate. The cover plate thus functions less as a provider of material and more for positioning the material strips in the gap. As a result, the tool is not required to take on an additional gap-filling role, with the result that welding processes are possible at a lower immersion depth.

The invention will be described hereinafter with reference to the accompanying drawings, in which:
Fig. 1 shows a schematic perspective view of a first process step of the connection process;
Fig. 2 shows a schematic perspective view of a second process step of the connection process;
Fig. 3 shows a schematic perspective view of the product of the method.

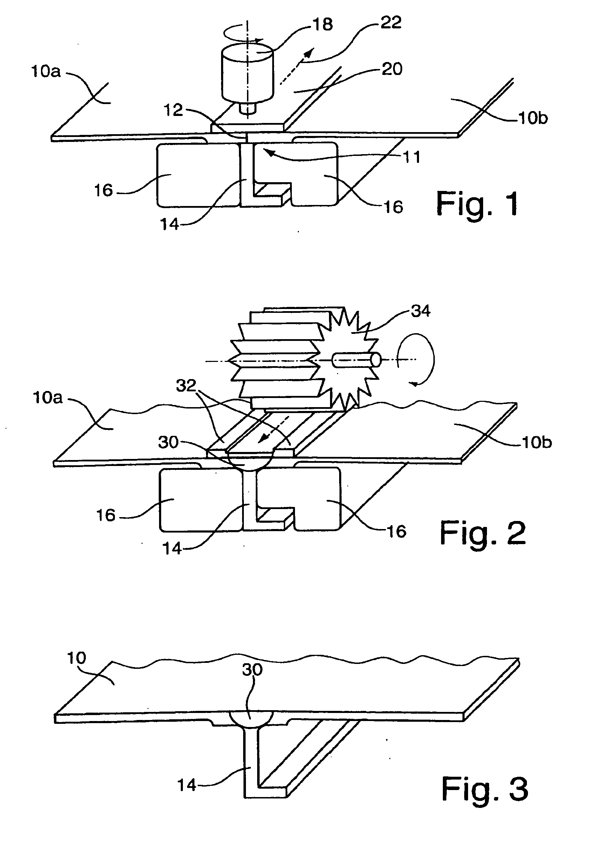

In **Fig. 1****,** two aircraft fuselage segments **10a, 10b** are shown in a schematic perspective view, which aircraft fuselage segments comprise two joint regions **11** to be interconnected and meet via these joint regions except for a remaining gap **12.**

A reinforcing profile **14,** for example a stringer, is arranged on one side of this gap **12,** the connection side of said reinforcing profile lying directly against the region of the gap **12** between the two aircraft fuselage segments **10a, 10b.** Two support members **16** are further provided on each side of the reinforcing profile **14** and serve as a thrust bearing for a tool **18** and also guide and fix the reinforcing profile **14** during the welding process.

Opposite the reinforcing profile **14,** the gap **12** is covered by a cover plate **20** which is arranged centrally above the gap **12.** In order to carry out the friction twist welding process, the tool **18** rotates (with a rotational speed of approximately 500 - 2000 1/min) and is pressed with considerable force in the region of 10kN or more against the cover plate **20** by means of a device (not shown), this cover plate **20** being warmed and plastically deformed and the material thereof being pressed in part into the gap **12.** The tool **18** is simultaneously moved along the extension of the gap **12** in the direction marked **22,** preferably at a speed of approximately 500 - 4000 mm/min. When the welding process is complete, in other words the tool **18** has travelled along the entire length of the gap **12,** a second welding process can take place, in other words the tool **18** can be moved either in the same direction or in the opposite direction, with the same or opposite direction of rotation.

In **Fig. 2****,** like parts are denoted with the same reference numerals as in Fig. 1. Fig. 2 shows a second processing step, the region plasticised during the welding process being indicated by the reference numeral **30.** Only two marginal strips **32** of the cover plate **20** (Fig. 1) remain, while the central region is pressed into the gap **12** by the tool **18.** A machining procedure follows by means of a miller **34,** in which the two marginal strips **32** and the region of the weld seam **30** extending over the surface of the two aircraft fuselage segments **10a, 10b** are milled out.

**Fig._3** shows the result of the process once the milling process is complete, wherein only one integral aircraft fuselage segment **10** is provided, having a smooth milled welding region **30,** the reinforcing profile **14** now being an integral component of the aircraft fuselage segment **10.** The milled welding region **30** can of course subsequently be polished up in order to further improve the quality of the surface.

Advantageously, both the aircraft fuselage segments **10a, 10b** and the cover plate **20** consist of the same material, usually an aluminium alloy used in the aviation industry, for example the alloy EN AW-2024, which is frequently used in the field of aviation and aerospace.

### List of reference numerals

- 10 a, b: aircraft fuselage segment
- 12: gap
- 14: reinforcing profile
- 16: support member
- 18: tool
- 20: cover plate
- 22: direction
- 30: plasticised region
- 32: marginal strips
- 34: milling

## Claims

1. Method of connecting two aircraft fuselage segments (10a, 10b) and a reinforcing profile (14) arranged in the joint region (11) of the two aircraft fuselage segments (10a, 10b) by friction twist welding using a rotating tool (18), **characterised in that** a cover plate (20) is brought onto the aircraft fuselage segments (10a, 10b) to be connected above the joint regions (11) and, after the friction twist welding process, the remainder of the cover plate (20) is milled off, wherein a cover plate (20) is used which comprises an integrally formed material strip in the centre, which material strip is pressed into the gap (12) between the joint regions during the welding process, wherein the machining process is repeated at least once with the rotating tool (18).

2. Method according to claim 1, **characterised in that** the cover plate (20) has a width which is greater than the effective diameter of the rotating tool (18), with the result that marginal strips (32) of the cover plate (20) remain on either side of the rotating tool (18) during friction twist welding.

3. Method according to claim 2, **characterised in that** the marginal strips (32) of the cover plate (20) which remain on either side of the rotating tool (18) during friction twist welding and a region of a weld seam (30) extending above the surface of the two aircraft fuselage segments (10a, 10b) are milled out.

4. Method according to either claim 1, 2 or claim 3, **characterised in that** the cover plate (20) has a wall thickness which corresponds approximately to the wall thickness of the components to be connected.

5. Method according to claim 4, **characterised in that** a cover plate (20) with a wall thickness of 3-5 mm is used.

6. Method according to any one of the preceding claims, **characterised in that** the machining process is repeated at least once with the rotating tool (18), wherein when the rotating tool (18) has travelled along the entire length of the gap (12), a second welding step is taking place, wherein the rotation tool (18) is moved either in the same direction or in the opposite direction, with the same or opposite direction of rotation.

7. Method according to any one of the preceding claims, **characterised in that** the rotating tool (18) rotates with a rotational speed of 500 - 2000 1/min and is pressed with a force in a region of 10kN and more against the cover plate (20).

8. Method according to any one of the preceding claims, **characterised in that** the milled welding region (30) is polished up.

## Patentansprüche

1. Verfahren zum Verbinden zweier Flugzeugrumpfsegmente (10a, 10b) und eines Verstärkungsprofils (14), das in der Stoßregion (11) der zwei Flugzeugrumpfsegmente (10a, 10b) angeordnet ist, durch Reibungstwistschweißen unter Verwendung eines rotierenden Werkzeugs (18), **dadurch gekennzeichnet, dass** eine Deckplatte (20) auf die Flugzeugrumpfsegmente (10a, 10b) gelegt wird, um über den Stoßregionen (11) verbunden zu werden, und dass nach dem Reibungstwistschweißprozess der Rest der Deckplatte (20) abgefräst wird, wobei eine Deckplatte (20) verwendet wird, die einen einstückig ausgebildeten Materialstreifen in der Mitte umfasst, wobei dieser Materialstreifen während des Schweißprozess in den Spalt (12) zwischen den Stoßregionen hineingedrückt wird, wobei der maschinelle Bearbeitungsprozess mindestens einmal mit dem rotierenden Werkzeug (18) wiederholt wird.

2. Verfahren nach Anspruch 1, **dadurch gekennzeichnet, dass** die Deckplatte (20) eine Breite hat, die größer als der effektive Durchmesser des rotierenden Werkzeugs (18) ist, mit dem Ergebnis, dass Randstreifen (32) der Deckplatte (20) auf beiden Seiten des rotierenden Werkzeugs (18) während des Reibungstwistschweißens verbleiben.

3. Verfahren nach Anspruch 2, **dadurch gekennzeichnet, dass** die Randstreifen (32) der Abdeckplatte (20), die auf jeder Seite des rotierenden Werkzeugs (18) während Reibungstwistschweißen verbleiben, und eine Region einer Schweißnaht (30), die sich über die Oberfläche der zwei Flugzeugrumpfsegmente (10a, 10b) erstreckt, herausgefräst werden.

4. Verfahren nach einem der Ansprüche 1, 2 oder Anspruch 3, **dadurch gekennzeichnet, dass** die Deckplatte (20) eine Wanddicke hat, die etwa der Wanddicke der zu verbindenden Komponenten entspricht.

5. Verfahren nach Anspruch 4, **dadurch gekennzeichnet, dass** eine Deckplatte (20) mit einer Wanddicke von 3-5 mm verwendet wird.

6. Verfahren nach einem der vorangehenden Ansprüche, **dadurch gekennzeichnet, dass** der maschinelle Bearbeitungsprozess mindestens einmal mit dem rotierenden Werkzeug (18) wiederholt wird, wobei, wenn sich das rotierende Werkzeug (18) entlang der gesamten Länge des Spalts (12) bewegt hat, ein zweiter Schweißschritt stattfindet, wobei das Rotationswerkzeug (18) entweder in derselben Richtung oder in der entgegengesetzten Richtung mit derselben oder der entgegengesetzten Drehrichtung bewegt wird.

7. Verfahren nach einem der vorangehenden Ansprüche, **dadurch gekennzeichnet, dass** sich das rotierende Werkzeug (18) mit einer Drehzahl von 500-2000 1/min dreht und mit einer Kraft in einem Bereich von 10 kN und mehr gegen die Deckplatte (20) gedrückt wird.

8. Verfahren nach einem der vorangehenden Ansprüche, **dadurch gekennzeichnet, dass** die gefräste Schweißregion (30) poliert wird.

## Revendications

1. Procédé d'assemblage de deux segments (10a, 10b) de fuselage d'aéronef et d'un profilé de renfort (14) disposé dans la région de jonction (11) des deux segments (10a, 10b) de fuselage d'aéronef, par soudage par friction-malaxage par utilisation d'un outil rotatif (18), **caractérisé en ce qu'**une plaque de recouvrement (20) est placée sur les segments (10a, 10b) de fuselage d'aéronef à assembler au-dessus des régions de jonction (11) et, après le processus de soudage par friction-malaxage, ce qui reste de la plaque de recouvrement (20) est éliminé par fraisage, dans lequel il est fait usage d'une plaque de recouvrement (20) qui comprend une bande de matériau formé d'une seule pièce au centre, laquelle bande de matériau est enfoncée dans l'espace (12) entre les régions de jonction pendant le processus de soudage, dans lequel le processus d'usinage est répété au moins une fois avec l'outil rotatif (18).

2. Procédé selon la revendication 1, **caractérisé en ce que** la plaque de recouvrement (20) présente une largeur qui est supérieure au diamètre effectif de l'outil rotatif (18), d'où il résulte que des bandes marginales (32) de la plaque de recouvrement (20) subsistent de chaque côté de l'outil rotatif (18) pendant le soudage par friction-malaxage.

3. Procédé selon la revendication 2, **caractérisé en ce que** les bandes marginales (32) de la plaque de recouvrement (20) qui subsistent de chaque côté de l'outil rotatif (18) pendant le soudage par friction-malaxage et une région de joint de soudure (30) s'étendant au-dessus de la surface des deux segments (10a, 10b) de fuselage d'aéronef sont éliminées par fraisage.

4. Procédé selon l'une des revendications 1, 2 et 3, **caractérisé en ce que** la plaque de recouvrement (20) a une épaisseur de paroi qui correspond approximativement à l'épaisseur de paroi des composants à assembler.

5. Procédé selon la revendication 4, **caractérisé en ce qu'**il est fait usage d'une plaque de recouvrement (20) ayant une épaisseur de paroi de 3 à 5 mm.

6. Procédé selon l'une quelconque des revendications précédentes, **caractérisé en ce que** le processus d'usinage est répété au moins une fois avec l'outil rotatif (18), dans lequel lorsque l'outil rotatif (18) a parcouru toute la longueur de l'espace (12), une seconde étape de soudage a lieu, dans laquelle l'outil de rotation (18) est déplacé soit dans la même direction soit dans la direction opposée, selon le même sens de rotation ou le sens de rotation opposé.

7. Procédé selon l'une quelconque des revendications précédentes, **caractérisé en ce que** l'outil rotatif (18) tourne à une vitesse de rotation de 500 à 2000 1/min et est comprimé avec une force d'environ 10 kN ou plus contre la plaque de recouvrement (20).

8. Procédé selon l'une quelconque des revendications précédentes, **caractérisé en ce que** la région de soudage fraisée (30) est polie.
